# EUROPEAN PATENT APPLICATION

(11) **EP 1 479 462 A1**
(43) Date of publication of application: **24.11.2004**
(21) Application number: 04011746.7
(22) Date of filing: 18.05.2004
(51) Int. Cl.: B21J 15/34, B23P 19/00

(54) **Remote fastener presenter**

(30) Priority: 22.05.2003 US 472808 P; 03.05.2004 US 837788
(71) Applicant: Newfrey LLC, Newark, Delaware 19711 (US)
(72) Inventor: Woyciesjes, James N., New Haven, Connecticut 06460 (US); Taylor, Brian M., Glastonbury, Connecticut 06033 (US)
(74) Representative: Haar, Lucas H., Dipl.-Ing.

(57) **Abstract**

A remote fastener presenter (16) includes a fastener storage module (18) and feed tube assembly (20), which deliver a fastener from the fastener storage module (18) to the remote fastener presenter (16) for loading into a fastening tool (14). The fastening presenter includes a translating module that receives the fastener and orients the fastener between a first orientation and a second orientation that is appropriate for loading into the fastening tool.

## Description

This invention relates to a remote fastener supply system and, more particularly, to a remote fastener presenter that orients a rivet for presentation to a rivet tool.

In a fastening operation, such as one including two work pieces that are to be fastened by a riveting operation, an operator uses a rivet tool to fasten the work pieces together with a rivet. Traditionally, the rivet tool receives one rivet at a time into a nosepiece, which requires the operator to load another rivet after the first has been fastened. Manual loading of the rivets into the nosepiece may present opportunities for misalignment of the rivet, inconvenience to the operator, and may not allow the operator to align and hold the work pieces while loading a rivet during fastening operations.

Various conventional systems present rivets to a riveting tool. In one such conventional system, the rivet is positioned in axial alignment with the nosepiece of the rivet tool a distance from the nosepiece. A vacuum or positive air pressure sucks or blows, respectively, the rivet into the nosepiece across the distance. The travel of the rivet over the distance may lead to misalignment of the rivet in the nosepiece and, if the mandrel of the nosepiece is burred or bent, failure of the rivet to load into the nosepiece.

Another conventional rivet presenting device is activated when the nosepiece of the rivet tool is inserted into a receiving aperture of the presenting device. A rivet travels mandrel end first through a hose from a remote storage to the presenting device. A vacuum in the nosepiece of the rivet tool sucks the mandrel of the rivet from the device into the nosepiece. The rivet tool is removed from the receiving aperture with the rivet positioned for fastening. A rivet presented in this conventional arrangement may have several disadvantages, including bent or burred rivet mandrels that snag in the tube because the rivets travel through the tube mandrel end first, causing clogs in the tube.

Accordingly, it is desirable to provide a remote fastener presenter that provides a consistent proper orientation of a rivet for presentation to a rivet tool while minimizing the potential for clogging.

The remote rivet presenter according to the present invention communicates with a fastener storage module by a feed tube assembly, which delivers a fastener from the fastener storage module to the remote fastener presenter for loading into the fastening tool. The fastening presenter reorients the fastener from a first orientation to a second orientation relative to a fastener transport axis for loading into the fastening tool.

In one fastener presenter, the fastener storage module blows a rivet through a feed tube and into a translating module. The translating module includes a drum with a nest portion that receives the rivet. The rivet arrives in the nest portion in a first orientation relative to the fastener transport axis. A vacuum holds the rivet in the nest portion and a control system monitors the vacuum level. The control system commands an actuator to rotate the drum. Rotation of the drum orients the rivet to a second orientation approximately 180° different from the first orientation. A nosepiece of a rivet tool partially encapsulates a mandrel of the rivet. A positive air pressure blows the mandrel up into the nosepiece, where it is held by a vacuum supplied through the rivet tool.

In another fastener presenter, a toothed rack translates in and out of a slot of the translating module and engages a drive sprocket that is axially engaged with the translating module. The nosepiece of the rivet tool actuates the toothed rack when inserted into the receptacle portion. The toothed rack translates into the slot and actuates a drive sprocket against the bias of a spring member, thereby rotating the translating module.

In another fastener presenter, the translating module includes a cylinder with a nest portion that receives the rivet. The rivet arrives in the rotating cylinder in a first orientation relative to a fastener transport axis. The control system commands an actuator to rotate the cylinder. Rotation of the cylinder orients the rivet to a second orientation approximately 180° different from the first orientation. The control system then commands an air/vacuum module to supply air to a chamber, thereby axially displacing the piston and translating the rivet towards the receptacle portion. A vacuum generated through the nosepiece of the rivet tool sucks the rivet into the nosepiece.

The remote fastener presenter according to the present invention orients a fastener between a first orientation and a second orientation that is appropriate for loading into a fastening tool.

The various features and advantages of this invention will become apparent to those skilled in the art from the following detailed description of the currently preferred embodiment. The drawings that accompany the detailed description can be briefly described as follows.
Figure 1 shows a schematic view of a remote fastener presenting system;
Figure 2 shows a schematic view of a rivet;
Figures 3A-3C shows a schematic top view of a remote fastener presenter orienting a rivet;
Figure 4A shows a schematic side view of a remote fastener presenter;
Figure 4B shows a schematic top view of a remote fastener presenter;
Figures 5A-C shows a schematic top view of a remote fastener presenter orienting a rivet;
Figure 6 shows a schematic side view of a rivet tool encapsulating a rivet in a remote fastener presenter;
Figure 7 shows a partially exploded view of a remote fastening presenter actuated by a toothed rack; and
Figures 8A-C shows a schematic top view of a remote fastener presenter including a cylinder.

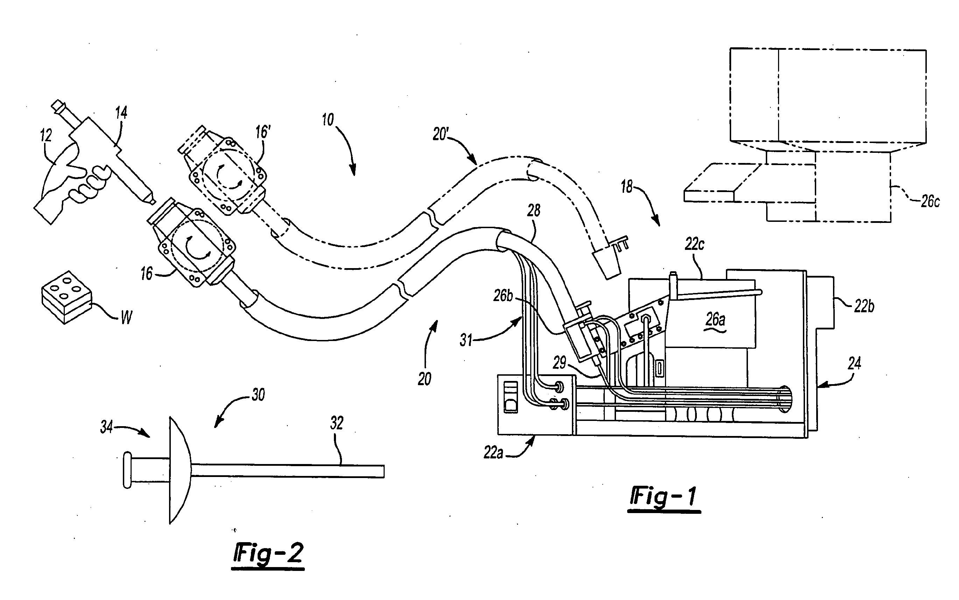

Figure 1 shows a schematic of a fastener presenting system 10, including a work piece W that is to be manually fastened by a human operator 12 using a fastening tool 14. The human operator 12 uses a remote fastening presenter 16 to load a fastener into the fastening tool 14. The remote fastening presenter 16 connects to a fastener storage module 18 by a feed tube assembly 20, which delivers a fastener from the fastener storage module 18 to the fastening tool 14. The fastener storage module 18 delivers the fastener in a first orientation. The remote fastening presenter 16 orients the fastener from the first orientation to a second orientation that is appropriate for loading into the fastening tool 14.

The feed tube assembly 20 allows the remote fastening presenter 16 to be located remotely from the fastener storage module 18, thereby increasing the useable workspace at the site of a fastening operation without having the fastener storage module 18 consuming space at the site. The human operator 12 may also portably carry the remote fastener presenter 16 from one fastening operation to another fastening operation. The fastener storage module 18 is in a fixed location; however, the human operator 12, tethered only by the feed tube assembly 20, may move from one fastening operation to another.

The fastener storage module 18 includes three sub-modules 22A, 22B, 22C that cooperate to supply a fastener to the feed tube assembly 20. The sub-module 22A preferably controls the function of the fastener storage module 18, communicates with the remote fastening presenter 16, and communicates with other fastener storage modules that may be used in conjunction with the fastener storage module 18. The sub-module 22B controls an air supply module 24 for the feed tube assembly 20. The sub-module 22C is a feeding module that may include, for example, a vibratory feeding bowl 26A, feed tracks (not shown), and at least one escapement 26B for removing individual fasteners from the vibratory feeding bowl 26A and a bulk feeder 26C. It is to be understood that the remote fastening presenter 16 can utilize other configurations of the fastener storage module 18.

The fastener storage module 18 supplies fasteners to the feed tube assembly 20, which includes a feed tube 28, an air supply tube 29, and electrical communication 31 between the sub-module 22A and the remote fastening presenter 16. A fastener is driven through the feed tube 28 by transport air from the air supply tube 29 and air supply module 24 to the remote fastening presenter 16.

The fastener presenting system 10 may include one or more additional remote fastening presenters 16' for providing multiple fasteners to a fastening tool 14 that has multiple heads and/or multiple operators. An additional feed tube assembly 20' provides the additional remote fastening presenter 16' with fasteners from the fastener storage module 18 or additional fastener storage module.

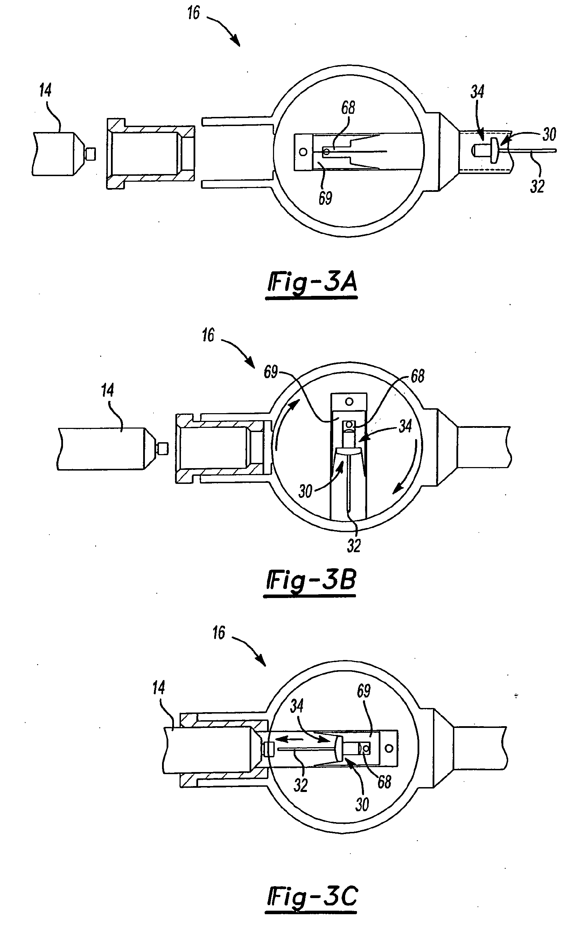

The fastener may be a standard type of rivet 30, as shown in Figure 2, having a mandrel 32 opposite a body portion 34. As illustrated in Figures 3A-3C, the rivet 30 travels through the feed tube 28 with the body portion 34 leading. Transporting the rivet 30 body portion 34 first may reduce risk that a slightly bent mandrel 32 or burr on the mandrel 32 snags in the feed tube 28. The rivet 30 arrives at the remote fastening presenter 16 body portion 34 first. As the fastener tool 14 approaches, the remote fastening presenter 16 orients the rivet 30 mandrel 32 first for loading into the fastener tool 14. It should be understood that any number of fastener types will benefit from the present invention

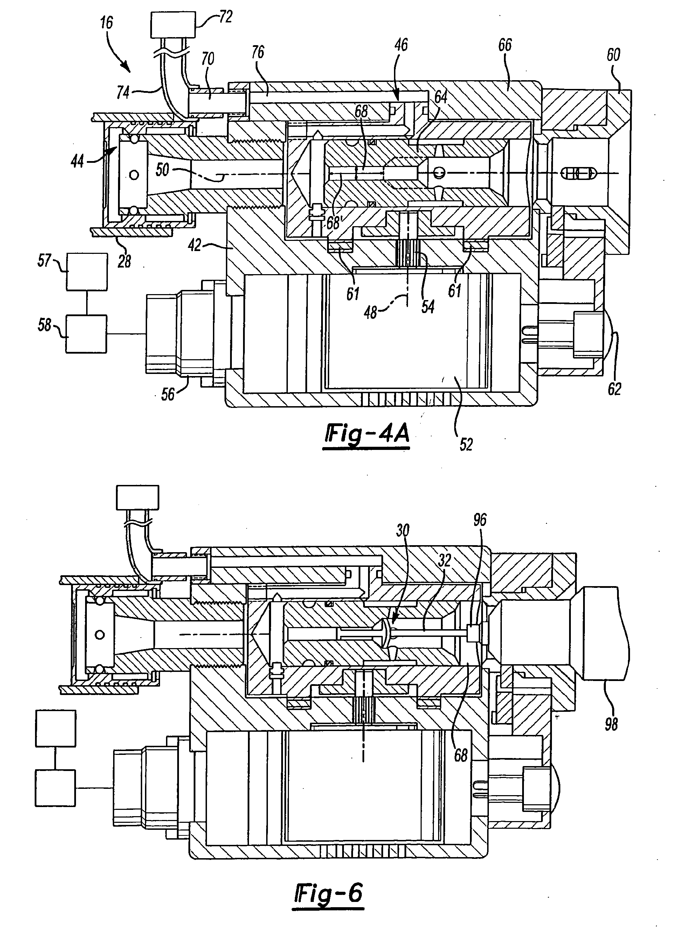

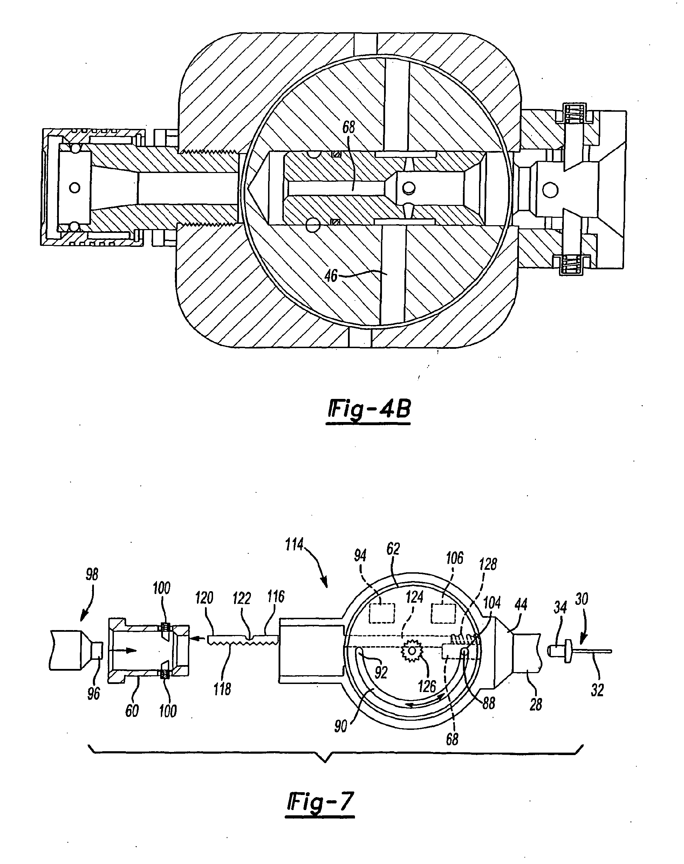

Figure 4A is a schematic side view of the remote fastening presenter 16, including a housing 42. The housing 42 includes a fastener ingress 44, which connects to the feed tube 28 for receiving fasteners such as the rivet 30. The housing 42 houses a translating module 46 (also illustrated in Figure 4B) that rotates about a translating module axis 48. The translating module 46 includes a fastener transport axis 50 that is generally axially aligned with the fastener ingress 44 when in a rivet receiving position (Figure 3A). An actuator 52, such as a stepper motor, includes a shaft 54 that rotates the translating module 46 about the translating module axis 48. A stepper motor is preferred to avoid abrupt acceleration and deceleration and excess wear in the translating module. An electrical connection 56 connects the actuator 52 to a power source 57 and the translating module 46 to a control system 58. The control system 58 commands the actuator 52 to selectively rotate about the translating module axis 48. A receptacle portion 60 opposite the fastener ingress 44 receives the nosepiece of a fastening tool for delivering a fastener to the nosepiece. First and second micro-switches 61 spaced, respectively, from the fastener ingress 44 and receptacle portion 60 signal the control system 58 when the translating module rotates from a fastener receiving position to a fastener delivery position (Figure 3C) or vice versa. A LED/reset indicator 62 indicates to the human operator 12 when a fastener is ready to be delivered.

The translating module 46 includes a drum 64 and drum cover 66 which may be transparent to allow the human operator 12 to view a nest portion 68 (also illustrated in Figure 4B). The drum 64 rotates about the translating module axis 48 and is driven by the actuator 52. The nest portion 68 receives a fastener through the fastener ingress 44. A base portion 69 (Figure 3A) of the nest portion 68 is generally shaped to receive the body portion of a rivet or other fastener to retain the rivet or fastener. The nest portion 68 can be a variety of sizes, illustrated by alternative nest portion 68', to accommodate a variety of common rivet sizes four through eight and different lengths of rivet mandrels.

A vacuum/air connection 70 on the housing 42 connects to a vacuum/air supply module 72 by a tube 74. The vacuum/air supply module 72 generates a vacuum or supplies air to the vacuum/air channel 76 in response to commands from the control system 58. The vacuum/air channel 76 is in fluid communication with the nest portion 68.

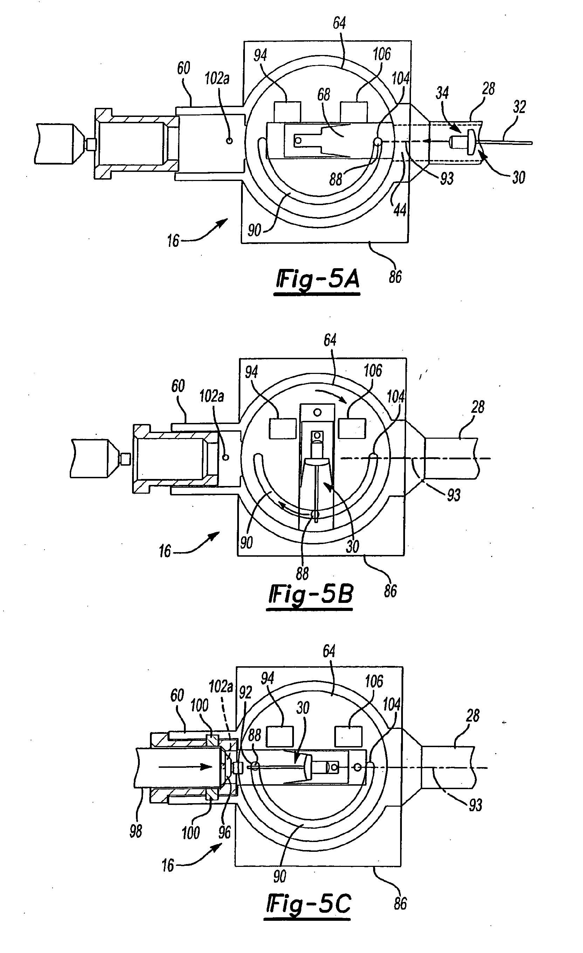

Figures 5A-5C show schematic top views of the remote fastening presenter 16 delivering the rivet 30. The rivet 30 is blown through the feed tube 28, through the fastener ingress 44, and into the nest portion 68 which is oriented to receive the rivet 30. The rivet 30 arrives in the nest portion 68 in a first orientation, which is mandrel 32 first. The rivet 30 is held in the nest portion 68 with a vacuum supplied through the vacuum/air channel 76 (Figure 4).

The control system 58 (Figure 4) monitors the vacuum level in the nest portion 68. When the rivet 30 is present in the nest portion 68, the rivet 30 at least partially blocks the vacuum/air channel 76 and the vacuum pressure level increases. The control system 58 detects the vacuum pressure level increase and signals acquisition of the rivet 30 in the nest portion 68. The control system 58 then commands the fastener storage module 18 to cease generating transport air and an actuator 86 to rotate the drum 64 from the rivet receiving position (Figure 5A). As best illustrated in Figure 5B, as the drum 64 rotates, a guide pin 88 attached to the nest portion 68 translates in an arcuate groove 90.

As illustrated in Figure 5C, the guide pin 88 reaches a receptacle end 92 of the arcuate groove 90 when the drum 64 has rotated approximately 180°. The receptacle end 92 prevents the guide pin 88 from rotating any further. The rivet 30, or other type of fastener, is now in a second orientation relative to the fastener transport axis 93, approximately 180° from the first orientation. A receptacle end micro-switch 94 detects that the drum 64 has rotated to the delivery position and signals the control system 58. The control system 58 commands the actuator 86 to cease and activates the LED/reset indicator 62 (Figure 2) to alert the human operator 12 that the rivet 30 is available.

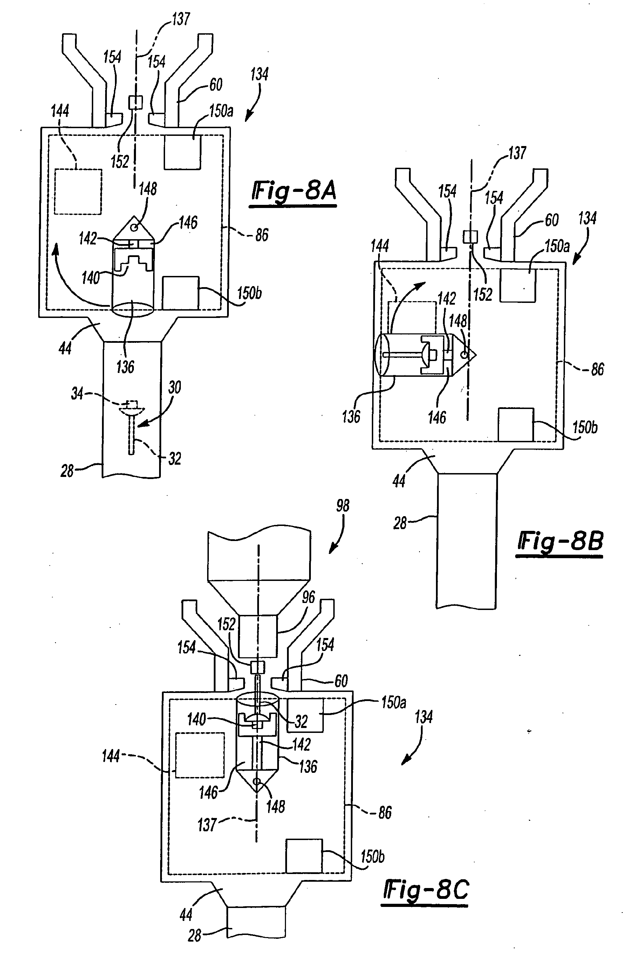

In response to the LED/reset indicator 62, the human operator 12 inserts a nosepiece 96 of a rivet tool 98 into the receptacle portion 60. The nosepiece 96 depresses a set of locking pins 100 located inside of the receptacle portion 60. The set of locking pins 100 guides the nosepiece 96 in the receptacle portion 60 and secures the nosepiece 96 in a ready position to receive the rivet 30. The nosepiece 96 extends into the nest portion 68 to at least partially encapsulate the mandrel 32 of the rivet 30 (Figure 6). Encapsulation of the nosepiece 96 around the mandrel 32 provides for alignment of the rivet 30 in the nosepiece 96. It is to be understood that other alignment systems may be realized without encapsulation.

A photo-eye sensor 102A located in the receptacle portion 60 and rivet tool sensor 102B located upstream from the photo-eye sensor 102A sense the presence of the rivet tool 98 and signal the control system 58. The rivet tool sensor 102B senses that the human operator 12 has inserted the rivet tool 98 into the receptacle portion 60 and the photo-eye sensor 102A senses that the nosepiece 96 is in position to receive the rivet mandrel 32. The control system 58, detecting insertion of the nosepiece 96 for loading of the rivet 30, commands the vacuum supplied through the vacuum/air channel 76 to cease and triggers a positive air pressure in the vacuum/air channel 76 for approximately 500ms. The positive air pressure blows the mandrel 32 up into the nosepiece 96, where it is held by a vacuum supplied through the rivet tool 98.

The photo-eye sensor 102A and rivet tool sensor 102B also sense the removal of the rivet tool 98 and signal the control system 58, which commands the actuator 86 to rotate the drum 64 to the rivet receiving position (Figure 5A). As the drum 64 rotates, the guide pin 88 translates in the arcuate groove 90. At the receiving end 104, the guide pin 88 cannot rotate any further. A receiving end micro-switch 106 detects that the drum 64 has rotated and signals the control system 58 that another rivet is ready to be delivered to the nest portion 68. The control system 58 commands the fastener storage module 18 to again generate transport air and supply another rivet, wherein the above described sequence repeats.

The control system 58 of the remote fastening presenter 16 verifies the position of the rivet 30 or other fastener during the delivery sequence. Improper delivery of the rivet 30 to the nest portion 68 or improper seating of the rivet 30 in the nest portion 68 does not increase the vacuum pressure level in the nest portion 68. When the control system 58 fails to detect a predetermined increase amount in the vacuum pressure level in the nest portion 68 within a predetermined time limit, the control system 58 shuts off the actuator 86. Also, when the control system 58 does not detect that the drum 64 has rotated, the control system 58 shuts off the actuator 86. These fail-safe controls allow the human operator 12 to diagnose and clear the problem. It is to be understood that other fault conditions may alternatively or additionally be provided.

Figure 7 illustrates another remote fastening presenter 114, including a toothed rack 116. The toothed rack 116 includes a toothed side 118 and a smooth side 120. The smoothed side 120 includes a notch 122. The rivet tool 98 translates the toothed rack 116 into a slot 124 in the drum 64 against the bias of a spring member 128 when the rivet tool is inserted into the receptacle portion 60. The toothed rack 116 engages a drive sprocket 126 that is axially engaged with the drum 64, thereby rotating the drum 64 from a rivet receiving position to a rivet delivery position. That is, the inserting of the rivet tool 98 engages the toothed rack 116 to rotate the drum 64. When the rivet tool 98 is removed from the receptacle portion 60, the bias of the spring member 128 translates the toothed rack 116 out of the slot 124, thereby engaging the drive sprocket 126 and rotating the drum 64 from the rivet delivery position to the rivet receiving position.

Figure 8A illustrates another remote fastening presenter 134, including a cylinder 136 having a longitudinal axis 137. The cylinder 136 includes a nest portion 140 that aligns axially with the fastener transport axis 138 and feed tube 28. A piston 142 in the cylinder 136 is axially moveable within the cylinder 136 and is in fluid communication with an air/vacuum module 144. The air/vacuum module 144 supplies air to or evacuates a chamber 146 formed by the piston 142 and cylinder 136 to axially move the piston 142. The control system 58 (Figure 4) commands an actuator 86, such as a rotary vane actuator, to rotate the cylinder 136 about a fulcrum 148. A receptacle end hydraulic damper 150A and receiving end hydraulic damper 150B spaced from the receptacle portion 60 and fastener ingress 44, respectively, cushion the cylinder 136 at the ends of a rotational path. The control system 58 also communicates with a micro-switch 152 in the receptacle portion 60 and spring loaded jaws 154. The spring loaded jaws 154 retract and extend to align the mandrel 32 of the rivet 30. The micro-switch 152 detects the presence of a fastening tool.

The control system 58 commands the fastener storage module 18 to deliver the rivet 30. The fastener storage module 18 blows the rivet 30 through the feed tube 28, through the fastener ingress 44, and into the nest portion 140. The rivet 30 arrives in the nest portion 140 in a first orientation relative to the fastener transport axis 138, which is mandrel 32 first.

After a predetermined time delay of one second from the delivery command to the fastener storage module 18, the control system 58 signals acquisition of the rivet 30 in the nest portion 140 and commands the actuator 86 to rotate the cylinder 136 as illustrated in Figure 8B.

As illustrated in Figure 8C, the receptacle end hydraulic damper 150A stops the rotation of the cylinder 136 at a rivet delivery position, approximately 180° from the receiving position. The cylinder 136 is axially aligned with the receptacle portion 60 and the rivet 30 is in a second orientation which is 180° different from the first orientation relative to the fastener transport axis 138.

After the cylinder 136 has rotated, the human operator 12 inserts the nosepiece 96 of the rivet tool 98 into the receptacle portion 60. The micro-switch 152 detects the nosepiece 96 and signals the control system 58 that the rivet 30 is ready to be delivered. The control system 58 commands the air/vacuum module 144 to supply air to the chamber 146, thereby axially displacing the piston 142 and translating the rivet 30 towards the receptacle portion 60. Initially, the extended spring loaded jaws 154 guide and align the mandrel 32 with the nosepiece 96 as the rivet 30 translates. As the piston 142 approaches full extension, the control system 58 commands the spring loaded jaws 154 to retract, allowing enough space for the wider body portion 34 of the rivet 30. As the spring loaded jaws 154 retract fully, a vacuum generated through the nosepiece 96 of the rivet tool 98 sucks the rivet 30 through the retracted spring loaded jaws 154 and sucks the mandrel 32 into the nosepiece 96. The vacuum holds the mandrel 32, and thus the rivet 30, in the nosepiece 96.

At a predetermined time of approximately 500ms from when the control system 58 commanded the spring loaded jaws 154 to retract, the control system 58 commands the air/vacuum module144 to generate a vacuum in the chamber 146, thereby axially retracting the piston 142 in the cylinder 136. At a predetermined time of approximately 500ms after commanding the air/vacuum module 144, the control system 58 commands the actuator 86 to rotate the cylinder 136 from the delivery position to the rivet receiving position (Figure 8A). The receiving end hydraulic damper 150B stops the rotation of the cylinder 136 as it rotates to the receiving position. At a predetermined time of approximately 200ms after commanding the actuator 86, the control system 58 commands the fastener storage module 18 to again generate transport air and supply another rivet, wherein the above described sequence repeats.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A fastener presenter assembly comprising:
a translating module (46) that orients a fastener (30) between a first orientation and a second orientation along a fastener transport axis (50).

2. The assembly as recited in claim 1, wherein said translating module (46) receives a pressure differential to move the fastener (30) relative to said translating module.

3. The assembly as recited in anyone of claims 1 or 2, wherein said translating module (46) comprises a vacuum/air module.

4. The assembly as recited in anyone of the preceding claims, wherein said translating module comprises a drum (64) or a cylinder that rotates about a rotational axis (48) transverse to said fastener transport axis (50).

5. The assembly as recited in anyone of the preceding claims, comprising:
a cylinder (136), rotatable about a fulcrum (148), orients a fastener (30) between a first orientation and a second orientation along a fastener axis;
a piston (142) axially moveable in said cylinder (136); and
a nest portion (140) mounted for axial movement within said cylinder along a cylinder axis.

6. The assembly as recited in claim 5, including a chamber (146) formed by said cylinder (136) and said piston (142).

7. The assembly as recited in claim 6, wherein said chamber (146) receives a pressure differential from said air/vacuum module to move said piston (142).

8. The assembly as recited in anyone of the preceding claims, wherein said translating module is driven by an actuator (52).

9. The assembly as recited in claim 8, wherein said actuator comprises a stepper motor.

10. The assembly as recited in claim 8, wherein said actuator comprises a rotary vane actuator.

11. The assembly as recited in claim 8, wherein said actuator comprises a toothed rack (116).

12. The assembly as recited in claim 11, wherein said toothed rack is driven manually by a fastener tool (98).

13. The assembly as recited in claim 1, wherein said first orientation and said second orientation differ by 180°.

14. The assembly as recited in anyone of the preceding claims, wherein said translating module (46) comprises a nest portion (68).

15. The assembly as recited in anyone of the preceding claims, further comprising a tool locking pin (100) in a tool receptacle portion (60) of said translating module (46)

16. The assembly as recited in anyone of the preceding claims, further comprising a control system (58) which selectively rotates said translating module.

17. The assembly as recited in claim 16, wherein said control system (58) rotates said translating module (46) in response to a sensor (102A, 102B).

18. The assembly as recited in claim 16, wherein said control system rotates said translating module in response to a vacuum.

19. The assembly as recited in claim 16, wherein said control system rotates said translating module in response to a micro-switch.

20. The assembly as recited in claim 16, wherein said control system rotates said translating module in response to a photo-eye sensor (102A) located in a receptacle portion (60).

21. A method of presenting a fastener comprising the steps of:
a) delivering a fastener to a fastener presenter;
b) orienting the fastener in the fastener presenter between a first orientation relative to a fastener transport axis and a second orientation; and
c) delivering the fastener to a fastening tool in the second orientation.

22. The method as recited in claim 21, wherein said step (b) includes delivering the fastener in a body first orientation to a nest portion.

23. The method as recited in claim 22, further comprising the steps of retaining the fastener in the nest portion with a vacuum.

24. The method as recited in claim 21, wherein said step (b) includes detecting a position of the fastener and commanding a response based on the position.

25. The method as recited in claim 24, wherein the response comprises commanding a fastener storage module to transport a fastener.

26. The method as recited in claim 24, wherein the response comprises commanding a vacuum/air module to selectively generate a pressure differential.

27. The method as recited in claim 21, wherein said step (c) includes using a pressure differential to deliver the fastener.

28. The method as recited in claim 21, wherein said step (c) includes driving a piston which retains the fastener to deliver the fastener.

29. The method as recited in claim 21, further comprising the steps of detecting the presence of a fastening tool and commanding a drum to orient the fastener based on the presence of the fastening tool.

30. The method as recited in claim 21, further comprising the steps of detecting the presence of a fastening tool and commanding a piston to extend and translate the fastener based on the presence of the fastening tool.

31. The method as recited in claim 21, further comprising the steps of detecting the removal of a fastening tool and commanding a drum to rotate based on the removal of the fastening tool.

32. The method as recited in claim 21, further comprising the steps of detecting the removal of a fastening tool and commanding a piston to retract based on the removal of the fastening tool.
